# EUROPÄISCHE PATENTSCHRIFT

(11) **EP 2 646 186 B1**
(45) Veröffentlichungstag und Bekanntmachung des Hinweises auf die Patenterteilung: **07.10.2015**
(21) Anmeldenummer: 11790781.6
(22) Anmeldetag: 01.12.2011
(51) Int. Cl.: B23B 27/14, B23P 15/28, C04B 35/117, C04B 35/119, C04B 35/584, C04B 35/597, C04B 35/64

(54) **FERTIGGEPRESSTE / FERTIGGESINTERTE SCHNEIDPLATTE UND VERFAHREN ZU DEREN HERSTELLUNG**
FINISH-PRESSED / FINAL-SINTERED BLANKING DIE AND METHOD FOR PRODUCING SAME
PLAQUETTE DE COUPE COMPACTÉE / FRITTÉE PRÊTE À L'EMPLOI ET PROCÉDÉ DE FABRICATION DE LA PLAQUETTE

(30) Priorität: 01.12.2010 DE 102010062259
(43) Veröffentlichungstag der Anmeldung: 09.10.2013
(73) Patentinhaber: CeramTec GmbH, 73207 Plochingen (DE)
(72) Erfinder: STEMMER, Uwe, 72622 Nürtingen (DE)
(74) Vertreter: Scherzberg, Andreas Hans
(86) Internationale Anmeldenummer: PCT/EP2011/071457
(87) Internationale Veröffentlichungsnummer: WO 2012/072721

(56) Entgegenhaltungen:
- WO-A1-2005/021192
- WO-A1-2007/075140
- DE-U1- 20 000 738
- US-A- 4 963 061
- US-A- 5 296 008
- US-A1- 2003 086 766

## Beschreibung

Die Erfindung betrifft eine einsatzbereite durch Sintern eines Rohlings hergestellte keramische Schneidplatte gemäss dem Oberbegriff des Patentanspruchs 1, siehe z.B. die Dokumente US 4963061 A und DE 200 00738 U1.

Nach dem Stand der Technik werden die engen Toleranzen für eine keramische Schneidplatte (z. B. bei der G-Toleranz im Inkreisdurchmesser ± 25 µm bei d = 12,7 mm und in der Dicke s = ±130 µm) durch Nachschleifen nach dem Sintern, d. h. in dem Zustand, in dem der Werkstoff bereits alle seine herausragenden Eigenschaften ausgebildet hat, mit Diamantwerkzeugen eingestellt. Neben den Winkeln, Radien und der Schneidkantenpräparation der Wendeschneidplatten kommt es auch auf einen sicheren Halt der Wendeschneidplatte im Plattensitz an. Dieses stellt entsprechende Anforderungen an die Ebenheit der Auflagefläche der Wendeschneidplatten. Diese Anforderung wird durch Planschleifen mit Diamantwerkzeugen erreicht. Dieses Nachbearbeiten ist immer mit hohen Schleifkräften und -drücken verbunden, die Schädigungen des Werkstoffes bewirken.

Der Erfindung liegt die Aufgabe zugrunde, eine einsatzbereite Schneidplatte nach dem Oberbegriff des Anspruchs 1 so zu verbessern, dass eine Nachbearbeitung nach dem Sintern zumindest teilweise vermieden ist. Außerdem sollen die Vorteile der fertiggepressten / fertiggesinterten Kontaktflächen zwischen der Schneidplatte und dem Werkstück genützt werden. Es soll auch ein optimales Aufliegen der Schneidplatte gewährleistet sein, damit Vibrationen mit den damit verbundenen Mikroausbrüchen/Verschleiß verhindert ist.

Nachfolgend wird die Erfindung anhand der Ansprüche und der Figuren näher erläutert.

Dadurch, dass angrenzend an die Schneidkanten eine umlaufende Spanfläche angeordnet ist und die Spanfläche die Auflagefläche umgrenzt, wobei die Seitenflächen, die Schneidkanten und die Spanfläche aus der beim Sintern entstandenen Sinterhaut bestehen und keine Schädigung durch eine materialabtragende Bearbeitung erfahren haben und ausschließlich die Auflageflächen einer materialabtragenden Bearbeitung unterzogen wurden und nicht aus der beim Sintern entstandenen Sinterhaut bestehen ist eine Nachbearbeitung nach dem Sintern für diese Flächen vermieden. Da die Sinterhaut häufig eine höhere Härte als der Grundwerkstoff besitzt, wird die Verschleißfestigkeit des Schneidstoffes bzw. der Schneidplatte dadurch erhöht und die Standzeit verlängert.

Bevorzugt genügt die Schneidplatte einer Maßhaltigkeit nach M-Toleranz nach IS01382 oder einer Maßhaltigkeit nach G-Toleranz nach IS01382. Durch diese engen Toleranzen ist die Maßhaltigkeit gegeben und sind Fehler durch Abweichung von der Toleranz verhindert.

Zur Befestigung der Schneidplatte weist die Auflagefläche bevorzugt eine Spannmulde auf. Diese ist bevorzugt kreisförmig ausgebildet und weist in der Mitte eine kugel- bzw. kreisförmige Erhebung auf, wobei die Erhebung oberhalb des Muldenbodens liegt und der höchste Punkt der Erhebung unterhalb der Auflagefläche liegt.

Bevorzugt besteht die Schneidplatte aus einer oder mehreren der nachfolgend genannten Keramik-Schneidstoffen:
- α-/β-SiAlONe mit und ohne Hartstoffverstärkung
- β-Si3N4 mit und ohne Hartstoffverstärkung
- Mischkeramik (Al2O3 - Ti(C, N))
- ZTA (Al2O3 - ZrO2)

Die Erfindung betrifft auch ein Verfahren gemäss dem Oberbegriff des Patentanspruchs 6.

Bevorzugt werden die Auflageflächen vor dem Sintern gegenüber den Spanflächen erhaben ausgebildet, wodurch die Auflageflächen nach dem Sintern geschliffen oder geläppt werden können ohne die Spanfläche und die Schneidkanten zu schädigen. Die materialabtragende Behandlung der Auflagefläche nach dem Sintern hat den Vorteil, dass die Schneidplatte optimal im Halter aufliegen kann und damit Vibrationen mit den damit verbundenen Mikroausbrüchen/Verschleiß verhindert sind.

Bevorzugt wird die Auflagefläche um kleiner 2 mm, bevorzugt zwischen 0,8 mm bis 1,2 mm gegenüber den Spanflächen erhaben ausgebildet.

Bevorzugt wird durch das Präzisionspressen des Rohlings eine Spannmulde in die Ober- und/oder Unterseite eingepresst.

In vorteilhafter Ausgestaltung wird zur Herstellung des Rohlings eine oder mehrere der nachfolgend genannten Keramik-Schneidstoffen verwendet:
- α-/β-SiAlONe mit und ohne Hartstoffverstärkung
- β-Si3N4 mit und ohne Hartstoffverstärkung
- Mischkeramik (Al2O3 - Ti(C, N))
- ZTA (Al2O3 - Zr02)

Bevorzugt werden die Keramik-Schneidstoffe zu einer pressfähigen Masse gemischt, die eine hohe Rieselfähigheit und dadurch insbesondere ein konstantes Formfüllvermögen aufweist, wobei der die Rieselfähigkeit charakterisierende Schüttwinkel der Masse kleiner gleich 35°, bevorzugt kleiner gleich 30°, besonders bevorzugt kleiner gleich 25° einzustellen ist. Durch die genannte Einstellung der Rieselfähigheit und des damit verbundenen Formfüllvermögens wird die Toleranz eingestellt.

Vor dem Sintern werden vorteilhaft die Pressgrate des Rohlings entfernt ohne dass die Kanten des Rohlings geschädigt werden.

Bevorzugt wird das unterschiedliche Press- und Schwindungsverhalten verschiedener Massechargen berücksichtigt, wobei durch Press- und Sinterversuche die Gründichte-Schwindungs-Charakteristik jeder Charge ermittelt und daraus die notwendige Fertigungsgründichte festgelegt wird und diese Fertigungsgründichte beim Einstellen der Pressen als Sollwert für die Gründichte der Rohlinge eingestellt wird. Dies ist ein wichtiger Schritt des erforderlichen Präzisionspressens.

Bevorzugt wird beim Sintern der Gasaustausch zwischen der Ofenatmosphäre und des Tiegelinneren, in denen die Rohlinge gesintert werden, minimiert und es werden nur Tiegelmaterialien verwendet, die inert sind, d.h. in keinster Weise mit den Rohlingen beim Sintern wechselwirken. Es kommt dadurch zu keinen Verunreinigungen.

Eine erfindungsgemäße Schneidplatte genügt so bevorzugt einer Maßhaltigkeit nach M-Toleranz nach ISO1382 und/oder einer Maßhaltigkeit nach G-Toleranz nach IS01382.

Bevorzugt ist die Schneidplatte eine Wendeschneidplatte.

Bevorzugt wird die erfindungsgemäße Schneidplatte zur Zerspanung von Metallen, NE - Metallen, Kunststoffen, Holz oder Verbundwerkstoffen verwendet.

Erfindungsgemäß werden beim Herstellen von Wendeschneidplatten aus Werkstoffen der Hochleistungskeramik durch Präzisionspressen und Direktsintern die Maße unter Einhaltung der M- und G-Toleranz nach ISO 1832 erreicht.

Die erfinderische Tätigkeit besteht unter anderem darin, den Rohling der Schneidplatte, vor dem Sintern, durch präzises Pressen (hier auch Präzisionspressen genannt) in eine derartige Form zu bringen, die es ermöglicht, dass nach dem Sintern an den Seitenflächen, den Schneidkanten und den Spanflächen ein Schleifen oder Läppen der fertig gesinterten Schneidplatte nicht mehr nötig ist.

Die Erfindung bewirkt folgende Verbesserungen in der Anwendung:
- Die Schädigung der Keramik durch Schleifen oder Läppen erfolgt nur an der Auflagefläche, d.h. geringere Anfälligkeit der Schneidplatten im Einsatz bezüglich Ausschiefern und Ausbröckeln.
- Die "Sinterhaut" bleibt erhalten. Da die Sinterhaut häufig eine höhere Härte als der Grundwerkstoff besitzt, wird die Verschleißfestigkeit des Schneidstoffes nochmals erhöht, welches sich in der Praxis bei der Zerspanung durch geringeren Freiflächen- und Kerbverschleiß äußert.
- Durch den geringeren Gesamtverschleiß an der Wendeschneidplatte können aufgrund der dadurch entstehenden geringeren Schnittkräfte auch Ausbrüche am Bauteil reduziert werden.
- Ein Vorteil ist auch, dass die Spanflächen als Spanbrecher ein Umlenken des Spanes bewirken
- Vorteilhaft ist auch eine Erniedrigung der Geräuschentwicklung beim Einsatz der erfindungsgemäßen Wendeschneidplatte (WSP).

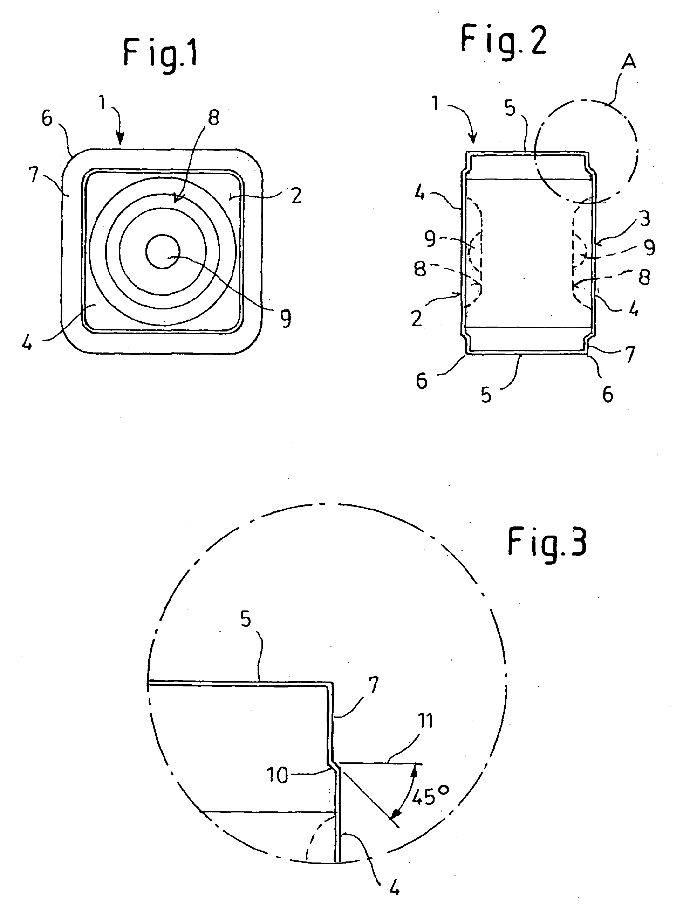

Die Erfindung beruht auf folgenden erfinderischen Leistungen bzw. folgende Merkmale bei der Herstellung sind alleine oder in Kombination vorteilhaft zu beachten:
- Beim Pressen des Rohlings ist vorteilhaft ein sehr genauer und präzise zentrierter Spalt zwischen Pressstempeln und Matrize einzustellen. Dies kann insbesondere durch ein Schnellspannsystem realisiert werden.
- Der Pressablauf wird bevorzugt extrem genau und mit hoher Reproduzierbarkeit eingestellt.
- Pressfähige Masse mit bevorzugt sehr hoher Rieselfähigkeit und dadurch konstantem Formfüllvermögen. Die Rieselfähigkeit wird durch den sogenannten Schüttwinkel charakterisiert. Für die Messung lässt man eine definierte Menge Pressgranulat in einen durchsichtigen Behälter gleichmäßig einrieseln. Dann wird die Bodenplatte ein Stück weit geöffnet, so dass ein Teil des Pulvers ausläuft. Je nach Rieselfähigkeit des Granulates bildet das im Behälter verbliebene Pulver eine mehr oder weniger steile Kante, deren Winkel als Schüttwinkel gemessen wird. Der Schüttwinkel sollte für eine gute Rieselfähigkeit kleiner gleich 35°, bevorzugt kleiner gleich 30°, besonders bevorzugt kleiner gleich 25° betragen.
- Eine hohe Konstanz in der Gründichte aller Rohlinge ist notwendig. Dies wird erreicht durch eine Masse mit sehr guter Rieselfähigkeit und einer sehr genau regelnden Presse. Mit einer automatischen Masse- und Höhenmessung in Anschluss an die Presse kann die Gründichte von jedem Pressteil berechnet werden. Die Streuung der Gründichte von Rohling zu Rohling sollte kleiner gleich 0,5% bevorzugt kleiner gleich 0,3% vom Mittelwert betragen (Beispiel s. Figur 1: Fertigungsgründichte 1,956 g/cm³, Gründichten sind innerhalb 1,951 - 1,963 g/cm³, Soll bei max. 0,3% Abweichung: 1,951 - 1,962 g/cm³).
- Entfernen der Pressgrate des Rohlings, ohne dass die Kanten des Rohlings geschädigt werden. Aufgrund des Spaltes zwischen Pressstempeln und Matrize verbleibt auf dem Rohling ein dünner Grat. Dieser muss vor dem Sintern entfernt werden, damit dieser nicht ansintert und später zu Ausbrüchen der Kante führen kann.
- Berücksichtigung des unterschiedlichen Press- und Schwindungsverhaltens verschiedener Massechargen. Hierbei wird durch Press- und Sinterversuche die Gründichte-Schwindungs-Charakteristik jeder Charge ermittelt und daraus die notwendige Fertigungsgründichte festgelegt. Diese Fertigungsgründichte gilt beim Einstellen der Pressen als Sollwert für die Gründichte der Rohlinge.
- Spezieller Ofenaufbau zur Vermeidung von Sinterverzug, Dichte-, Schwindungs- und Farbgradienten. Insbesondere muss der Gasaustausch zwischen Ofenatmosphäre und Tiegelinnerem minimiert werden. Zusätzlich dürfen nur Tiegelmaterialien verwendet werden, die inert sind, d.h. in keinster Weise mit dem Rohlingen beim Sintern wechselwirken. Diese Maßnahmen sind notwendig, um eine homogene Schwindung der Rohlinge während des Sinterns zu erreichen. Finden dagegen Wechselwirkungen der Rohlinge mit der Ofenatmosphäre oder dem Tiegelmaterial statt, wird die Schwindung der Rohlinge lokal beeinflusst, so dass ein Verzug beim Sintern stattfindet und die Maßhaltigkeit nicht mehr gewährleistet werden kann. Wenn ein Sinterverzug auftritt, sind in der Regel vor allem Ecken und Kanten der am Rand gesetzten Teile betroffen. Beispielsweise führt im Falle von Siliziumnitrid- oder SiAlON-Materialien eine hohe Konzentration an Kohlenstoff in der Gasatmosphäre durch z.B. neue Grafitmaterialien des Tiegels oder der Ofenisolation zu einer Reduzierung der zur Verdichtung unbedingt notwendigen Sinteradditive an der Oberfläche. Dadurch ist die Schwindung am Bauteilrand geringer als in der Bauteilmitte, wodurch ein Verzug im gesinterten Bauteil entsteht.

Zum besseren Einspannen der Schneidplatte ist bevorzugt in den Schneidplatten eine Mulde eingebracht, wie sie in der WO 03/013770 A1 beschrieben ist. Die Mulde weist in der Mitte eine kugel- bzw. kreisförmige Erhebung auf. Die Spitze der Erhebung liegt oberhalb des Muldenbodens und unterhalb der Schneidplattenoberseite. Zum Einspannen auf einem Schneidwerkzeug greift eine Spannpratze mit angepasster geformter Nase formschlüssig in die Mulde der Schneidplatte ein. Diese Mulde dient zur formschlüssigen Spannung auf einem Trägerkörper. Besonders für ziehende Schnitte, bei dem die Schneidplatte durch die wirkenden Schnittkräfte aus seinem Sitz gezogen werden könnte, bietet sich diese Schneidplatte mit der besonderen Mulde an. Zur weiteren Beschreibung dieser Mulde siehe die genannte Druckschrift.

Damit immer konstante Einbaubedingungen gegeben sind, ist in einer anderen erfindungsgemäßen Ausführungsform die Mulde so ausgebildet, wie es in der EP 1 536 903 B1 beschrieben ist. In diesem Fall ist eine erste Spannmulde zum Einspannen in das Schneidwerkzeug eingebracht und ist koaxial zur ersten Spannmulde eine zweite Spannmulde angeordnet, wobei die erste Spannmulde tiefer als die zweite Spannmulde und beide tiefer als die Schneidplattenoberseite angeordnet sind. Beim Klemmen dieser Schneidplatte in einem Werkzeug liegt eine Spannpratze des Werkzeugs auf der zweiten Spannmulde auf und greift zum Beispiel mit einer Nase in die erste Spannmulde ein. Der Abstand von der Auflagefläche der Spannpratze zur Mulde ist damit immer konstant.

Figur 1 zeigt eine erfindungsgemäße Schneidplatte in Draufsicht, Figur 2 im Schnitt und Figur 3 den Ausschnitt A von Figur 2 im vergrößerten Maßstab.

Im gezeigten Beispiel handelt es sich um eine quadratische Schneidplatte 1, die als Wendeschneidplatte ausgebildet ist. Die Schneidplatte hat eine Ober- und Unterseite 2, 3 und eine die Oberseite 2 mit der Unterseite 3 verbindende Seitenfläche 5. Angrenzend an die Schneidkanten 6 ist eine umlaufende Spanfläche 7 angeordnet, die eine Tiefe von 1 mm hat. Die Seitenflächen 5 und die Spanfläche 7 sind nach dem Sintern keiner materialabtragenden Bearbeitung unterzogen worden, so dass sie über eine unverletzte Sinterhaut verfügen. Innerhalb der umlaufenden Spanfläche 7 befindet sich eine Auflagefläche 4, mit der die Schneidplatte 1 in einem Schneidwerkzeug aufsitzt. Die Auflagefläche 4 ist gegenüber der Spanfläche 7 erhaben. Der Höhenunterschied der Auflagefläche 4 zur Spanfläche 7 liegt bei der hier beschriebenen Ausführungsform zwischen 0,05 bis 0,1 mm. Über eine Schräge 10 geht die Spanfläche 7 in die Auflagefläche 4 über. Die Schräge 10 verläuft unter einem Winkel von 45 Grad zur Oberflächennormalen 11 der Spanfläche 7.

Die Auflagefläche 4 ist mit einer Spannmulde 8 versehen, wobei die Spannmulde 8 kreisförmig ausgebildet ist und in der Mitte eine kugel- bzw. kreisförmige Erhebung 9 aufweist und die Erhebung 9 oberhalb des Muldenbodens und unterhalb der Auflagefläche 4 liegt. Zum Befestigen greift bevorzugt ein Eingriffelement eines Werkzeughalters mit einem kreisförmiger Ring in die kreisförmige Spannmulde ein und umgreift dabei die Erhebung 9.

## Patentansprüche

1. Einsatzbereite durch Sintern eines Rohlings hergestellte keramische Schneidplatte (1), als Wendeschneidplatte, mit einer Ober- und Unterseite (2, 3), die jeweils eine Auflagefläche (4) für den Einbau in einen Klemmhalter eines Schneidwerkzeuges aufweisen, mit die Ober- und Unterseite (2, 3) verbindenden Seitenflächen (5) und mit Schneidkanten (6) zur spanenden Bearbeitung von Werkstücken, wobei angrenzend an die Schneidkanten (6) eine umlaufende Spanfläche (7) angeordnet ist und die Spanfläche (7) die Auflagefläche (4) umgrenzt, **dadurch gekennzeichnet, dass** die Seitenflächen (5), die Schneidkanten (6) und die Spanfläche (7) aus der beim Sintern entstandenen Sinterhaut bestehen und ausschließlich die Auflageflächen (4) einer materialabtragenden Bearbeitung unterzogen wurden und nicht aus der beim Sintern entstandenen Sinterhaut bestehen.

2. Schneidplatte nach Anspruch 1, **dadurch gekennzeichnet, dass** die Schneidplatte (1) einer Maßhaltigkeit nach M-Toleranz nach IS01382 genügt oder die Schneidplatte (1) einer Maßhaltigkeit nach G-Toleranz nach IS01382 genügt.

3. Schneidplatte nach Anspruch 1 oder 2, **dadurch gekennzeichnet, dass** die Auflageflächen (4) eine Spannmulde (8) aufweisen.

4. Schneidplatte nach Anspruch 3, **dadurch gekennzeichnet, dass** die Spannmulden (8) in der Mitte eine kugel- bzw. kreisförmige Erhebung (9) aufweisen und die Erhebung (9) oberhalb des Muldenbodens liegt und der höchste Punkt der Erhebung (9) unterhalb der Auflagefläche (4) liegt.

5. Schneidplatte nach einem der Ansprüche 1 bis 4, **dadurch gekennzeichnet, dass** die Schneidplatte (1) aus einer oder mehreren der nachfolgend genannten Keramik-Schneidstoffen besteht:
- α-/β-SiAlONe mit und ohne Hartstoffverstärkung
- β-Si3N4 mit und ohne Hartstoffverstärkung
- Mischkeramik (Al2O3 - Ti(C,N))
- ZTA (Al2O3 - Zr02)

6. Verfahren zur Herstellung einer durch Sintern eines Rohlings hergestellten keramischen Schneidplatte (1) mit einer Ober- und Unterseite (2, 3), die jeweils eine Auflagefläche (4) für den Einbau in einen Klemmhalter eines Schneidwerkzeuges aufweisen, mit die Ober- und Unterseite (2, 3) verbindenden Seitenflächen (5) und mit Schneidkanten (6) zur spanenden Bearbeitung von Werkstücken, wobei angrenzend an die Schneidkanten (6) eine umlaufende Spanfläche (7) angeordnet wird und die Spanfläche (7) die Auflagefläche (4) umgrenzt, der Rohling der Schneidplatte (1) vor dem Sintern durch Präzisionspressen in die gewünschte Form gebracht und anschließend der Rohling gesintert wird, zur Herstellung einer Schneidplatte (1) nach einem der Ansprüche 1 bis 5, **dadurch gekennzeichnet, dass** nach dem Sintern ausschließlich die Auflageflächen (4) einer materialabtragenden Behandlung unterzogen werden.

7. Verfahren nach Anspruch 6, **dadurch gekennzeichnet, dass** die Auflageflächen (4) vor dem Sintern gegenüber den Spanflächen (7) erhaben ausgebildet werden.

8. Verfahren nach Anspruch 7, **dadurch gekennzeichnet, dass** die Auflageflächen (4) um kleiner 2 mm, bevorzugt zwischen 0,8 mm bis 1,2 mm gegenüber den Spanflächen (7) erhaben ausgebildet werden.

9. Verfahren nach einem der Ansprüche 6 bis 8, **dadurch gekennzeichnet, dass** durch das Präzisionspressen des Rohlings eine Spannmulde (8) in die Auflagefläche (4) der Ober- und/oder Unterseite (2, 3) eingepresst wird.

10. Verfahren nach einem der Ansprüche 6 bis 9, **dadurch gekennzeichnet, dass** zur Herstellung des Rohlings eine oder mehrere der nachfolgend genannten Keramik-Schneidstoffen verwendet wird:
- o-/β-SiAlONe mit und ohne Hartstoffverstärkung
- β-Si3N4 mit und ohne Hartstoffverstärkung
- Mischkeramik (Al2O3 - Ti(C,N))
- ZTA (Al2O3 - ZrO2)

11. Verfahren nach einem der Ansprüche 6 bis 10, **dadurch gekennzeichnet, dass** die Keramik-Schneidstoffe zu einer pressfähigen Masse gemischt werden, die eine hohe Rieselfähigheit und dadurch insbesondere ein konstantes Formfüllvermögen aufweist, wobei der die Rieselfähigkeit charakterisierende Schüttwinkel der Masse kleiner gleich 35°, bevorzugt kleiner gleich 30°, besonders bevorzugt kleiner gleich 25° einzustellen ist.

12. Verfahren nach einem der Ansprüche 6 bis 11, **dadurch gekennzeichnet, dass** vor dem Sintern die Pressgrate des Rohlings entfernt werden ohne dass die Kanten des Rohlings geschädigt werden.

13. Verfahren nach einem der Ansprüche 6 bis 12, **dadurch gekennzeichnet, dass** das unterschiedliche Press- und Schwindungsverhalten verschiedener Massechargen berücksichtigt wird, wobei durch Press- und Sinterversuche die Gründichte-Schwindungs-Charakteristik jeder Charge ermittelt und daraus die notwendige Fertigungsgründichte festgelegt wird und diese Fertigungsgründichte beim Einstellen der Pressen als Sollwert für die Gründichte der Rohlinge eingestellt wird.

14. Verfahren nach einem der Ansprüche 6 bis 13, **dadurch gekennzeichnet, dass** beim Sintern der Gasaustausch zwischen der Ofenatmosphäre und des Tiegelinneren, in denen die Rohlinge gesintert werden, minimiert wird und nur Tiegelmaterialien verwendet werden, die inert sind, d.h. in keinster Weise mit den Rohlingen beim Sintern wechselwirken.

## Claims

1. A ready-to-use ceramic cutting plate (1), as an indexable cutting plate, produced by sintering a blank, having an upper and lower side (2, 3), which each have a bearing face (4) for installation in a clamping holder of a cutting tool, having side faces (5) connecting the upper and lower side (2, 3) and having cutting edges (6) for machining work pieces, wherein arranged adjacently to the cutting edges (6) there is a circumferential working face (7), and the working face (7) borders the bearing face (4), **characterised in that** the side faces (5), the cutting edges (6) and the working face (7) consist of the sinter skin that developed during the sintering, and exclusively the bearing faces (4) have been subjected to material-removing processing and do not consist of the sinter skin that developed during the sintering.

2. A cutting plate according to claim 1, **characterised in that** the cutting plate (1) complies with a dimensional accuracy according to the M-tolerance of ISO1382, or the cutting plate (1) complies with a dimensional accuracy according to a G-tolerance of ISO1382.

3. A cutting plate according to claim 1 or 2, **characterised in that** the bearing faces (4) have a clamping trough (8).

4. A cutting plate according to claim 3, **characterised in that** the clamping troughs (8) have in the centre a spherical or circular elevation (9), and the elevation (9) lies above the trough base, and the highest point of the elevation (9) lies below the bearing face (4).

5. A cutting plate according to one of claims 1 to 4, **characterised in that** the cutting plate (1) consists of one or more of the ceramic cutting materials mentioned below:
- α/β SiAlONe with and without hard-material reinforcement
- β-Si3N4 with and without hard-material reinforcement
- mixed ceramic (A12O3 - Ti(C,N))
- ZTA (A12O3 - ZrO2).

6. A method for producing a ceramic cutting plate (1) produced by sintering a blank, having an upper and lower side (2, 3) which each have a bearing face (4) for installation in a clamping holder of a cutting tool, having side faces (5) connecting the upper and lower side (2, 3) and having cutting edges (6) for machining work pieces, wherein arranged adjacently to the cutting edges (6) there is a circumferential working face (7), and the working face (7) borders the bearing face (4), the blank of the cutting plate (1) is brought into the desired form prior to the sintering by precision-pressing and subsequently the blank is sintered, in order to produce a cutting plate (1) according to one of claims 1 to 5, **characterised in that** after the sintering exclusively the bearing faces (4) are subjected to material-removing treatment.

7. A method according to claim 6, **characterised in that** the bearing faces (4) are formed so as to be elevated with respect to the working faces (7) prior to the sintering.

8. A method according to claim 7, **characterised in that** the bearing faces (4) are formed so as to be elevated by less than 2 mm, preferably between 0.8 mm to 1.2 mm, with respect to the working faces (7).

9. A method according to one of claims 6 to 8, **characterised in that** by means of the precision-pressing of the blank a clamping trough (8) is pressed into the bearing face (4) of the upper and/or lower side (2, 3).

10. A method according to one of claims 6 to 9, **characterised in that** in order to produce the blank one or more of the ceramic cutting materials mentioned below is/are used:
- α/β SiAlONe with and without hard-material reinforcement
- β-Si3N4 with and without hard-material reinforcement
- mixed ceramic (A12O3 - Ti(C,N))
- ZTA (A12O3 - ZrO2).

11. A method according to one of claims 6 to 10, **characterised in that** the ceramic cutting materials are mixed to form a mass that is capable of being pressed and has a high level of pourability and as a result in particular a constant mould-filling capacity, wherein the angle of repose of the mass characterising the pourability is smaller than or equal to 35°, preferably smaller than or equal to 30°, particularly preferably smaller than or equal to 25°.

12. A method according to one of claims 6 to 11, **characterised in that** prior to the sintering the press flashes on the blank are removed without the edges of the blank being damaged.

13. A method according to one of claims 6 to 12, **characterised in that** the different pressing and shrinkage behaviour of various mass batches is taken into consideration, wherein by means of pressing and sintering tests the green-density/shrinkage characteristics of each batch is determined and therefrom the necessary manufacturing green density is established, and this manufacturing green density is set when setting the pressing as a desired value for the green density of the blanks.

14. A method according to one of claims 6 to 13, **characterised in that** during the sintering the gas exchange between the furnace atmosphere and the interior of the crucible, in which the blanks are sintered, is minimized, and only crucible materials are used that are inert, that is, in no way interact with the blanks during the sintering.

## Revendications

1. Plaquette de coupe (1) céramique prête à l'emploi, en tant que plaquette amovible, fabriquée par frittage d'une ébauche, comportant une face supérieure et une face inférieure (2, 3) qui présentent chacune une surface d'appui (4) pour le montage dans un porte-plaquette d'un outil de coupe, comportant des faces latérales (5), reliant les faces supérieure et inférieure (2, 3), et comportant des arêtes de coupe (6) destinées à l'usinage de pièces par enlèvement de copeaux, sachant qu'une face de coupe (7) périphérique est disposée de façon adjacente aux arêtes de coupe (6) et la face de coupe (7) délimite la surface d'appui (4), **caractérisée en ce que** les faces latérales (5), les arêtes de coupe (6) et la face de coupe (7) sont constituées de la peau de frittage qui s'est formée lors du frittage, et que seules les surfaces d'appui (4) ont été soumises à un usinage par enlèvement de matière et ne sont pas constituées de la peau de frittage qui s'et formée lors du frittage.

2. Plaquette de coupe selon la revendication 1, **caractérisée en ce que** la plaquette de coupe (1) satisfait aux dimensions prescrites de la tolérance M selon ISO 1382, ou que la plaquette de coupe (1) satisfait aux dimensions prescrites de la tolérance G selon ISO 1382.

3. Plaquette de coupe selon la revendication 1 ou 2, **caractérisée en ce que** les surfaces d'appui (4) présentent un creux de serrage (8).

4. Plaquette de coupe selon la revendication 3, **caractérisée en ce que** les creux de serrage (8) présentent au milieu une protubérance (9) sphérique ou circulaire, et que la protubérance (9) se situe au-dessus du fond du creux et le point le plus élevé de la protubérance se situe en dessous de la surface d'appui (4).

5. Plaquette de coupe selon l'une des revendications 1 à 4, **caractérisée en ce que** la plaquette de coupe (1) est constituée d'un ou plusieurs des matériaux céramiques de coupe cités ci-après :
- α-/β-SiAlONe avec et sans renfort en matériau dur
- β-Si3N4 avec et sans renfort en matériau dur céramique mixte (Al2O3 - Ti(C,N))
- ZTA (Al2O3 - ZrO2)

6. Procédé de fabrication d'une plaquette de coupe (1) céramique fabriquée par frittage d'une ébauche, comportant une face supérieure et une face inférieure (2, 3) qui présentent chacune une surface d'appui (4) pour le montage dans un porte-plaquette d'un outil de coupe, comportant des faces latérales (5), reliant les faces supérieure et inférieure (2, 3), et comportant des arêtes de coupe (6) destinées à l'usinage de pièces par enlèvement de copeaux, sachant qu'une face de coupe (7) périphérique est disposée de façon adjacente aux arêtes de coupe (6) et la face de coupe (7) délimite la surface d'appui (4), qu'avant le frittage l'ébauche de la plaquette de coupe (1) reçoit la forme souhaitée, par compression de précision, et l'ébauche est ensuite frittée, en vue de fabriquer une plaquette de coupe (1) selon l'une des revendications 1 à 5, **caractérisé en ce que**, après le frittage, seules les surfaces d'appui (4) sont soumises à un traitement par enlèvement de matière.

7. Procédé selon la revendication 6, **caractérisé en ce que**, avant le frittage, les surfaces d'appui (4) sont réalisées de façon surélevée par rapport aux faces de coupe (7).

8. Procédé selon la revendication 7, **caractérisé en ce que** les surfaces d'appui (4) sont réalisées de façon surélevée de moins de 2 mm, de préférence entre 0,8 mm et 1,2 mm, par rapport aux faces de coupe (7).

9. Procédé selon l'une des revendications 6 à 8, **caractérisé en ce que** lors de la compression de précision de l'ébauche, un creux de serrage (8) est pressé dans la surface d'appui (4) de la face supérieure ou de la face inférieure (2, 3) ou des deux faces.

10. Procédé selon l'une des revendications 6 à 9, **caractérisé en ce que** pour la fabrication de l'ébauche, un ou plusieurs des matériaux céramiques de coupe cités ci-après sont utilisés :
- α-/β-SiAlONe avec et sans renfort en matériau dur
- β-Si3N4 avec et sans renfort en matériau dur
- céramique mixte (Al2O3 - Ti(C,N))
- ZTA (Al2O3 - ZrO2)

11. Procédé selon l'une des revendications 6 à 10, **caractérisé en ce que** les matériaux céramiques de coupe sont mélangés pour obtenir une masse compressible qui présente une faculté d'écoulement élevée et de ce fait notamment une aptitude constante au remplissage de moule, l'angle de déversement de la masse, qui caractérise la faculté d'écoulement, pouvant être réglé de manière à être inférieur ou égal à 35°, de préférence inférieur ou égal à 30° et tout particulièrement inférieur ou égal à 25°.

12. Procédé selon l'une des revendications 6 à 11, **caractérisé en ce que**, avant le frittage, on élimine les bavures de l'ébauche, sans endommager les arêtes de l'ébauche.

13. Procédé selon l'une des revendications 6 à 12, **caractérisé en ce que** l'on prend en compte des comportements de compression et de retrait différents de charges de masse différentes, sachant que l'on détermine la caractéristique de retrait de densité à vert de chaque charge par des essais de compression et de frittage, à partir de laquelle on définit la densité de fabrication à vert nécessaire, et on utilise cette densité de fabrication à vert lors du réglage des presses, en tant que valeur de consigne pour la densité à vert des ébauches.

14. Procédé selon l'une des revendications 6 à 13, **caractérisé en ce que** lors du frittage, on réduit à un minimum l'échange de gaz entre l'atmosphère du four et l'intérieur du creuset, dans lesquels sont frittées les ébauches, et que l'on n'utilise que des matériaux de creuset qui sont inertes, c'est-à-dire qui ne présentent aucune interaction avec les ébauches lors du frittage.
